(19) Europäisches Patentamt / European Patent Office / Office européen des brevets

(11) **EP 3 486 284 A1**

(12) **EUROPEAN PATENT APPLICATION**
published in accordance with Art. 153(4) EPC

(43) Date of publication:
22.05.2019 Bulletin 2019/21

(21) Application number: 17827293.6

(22) Date of filing: 09.06.2017

(51) Int Cl.:
*C08L 33/14* (2006.01)   *B32B 27/00* (2006.01)
*B32B 27/30* (2006.01)   *C08K 5/1515* (2006.01)
*C08K 5/29* (2006.01)

(86) International application number:
PCT/JP2017/021435

(87) International publication number:
WO 2018/012161 (18.01.2018 Gazette 2018/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 14.07.2016 JP 2016139159
01.06.2017 JP 2017108906

(71) Applicant: Nitto Denko Corporation
Ibaraki-shi, Osaka 567-8680 (JP)

(72) Inventors:
• HIGASHI, Masatsugu
  Ibaraki-shi
  Osaka 567-8680 (JP)
• TOSAKI, Yutaka
  Ibaraki-shi
  Osaka 567-8680 (JP)

(74) Representative: Grünecker Patent- und
Rechtsanwälte
PartG mbB
Leopoldstraße 4
80802 München (DE)

(54) **RESIN COMPOSITION, RESIN LAYER, AND LAMINATED SHEET**

(57) A resin composition characterized by including a (meth)acrylic polymer having a Tg of -40°C or lower obtained by polymerizing a monomer component including an alkyl (meth)acrylate (a1), the Tg of a homopolymer of which is -50°C or lower, that has a C8-18 branched alkyl group at the end of the ester group and a (meth)acrylate (a2), the Tg of a homopolymer of which is -40°C or lower, that has an ether bond within the molecular skeleton. The resin composition can achieve both high adhesive strength and high holding power to an adherend having a rough surface.

EP 3 486 284 A1

**Description**

TECHNICAL FIELD

The present invention relates to a resin composition, a resin layer, and a laminated sheet.

BACKGROUND ART

One basic performance required for pressure-sensitive adhesives is that the adhesives can be strongly bonded to various adherends. Generally, laminated sheets such as conventional pressure-sensitive-adhesive sheets or pressure-sensitive-adhesive tapes (hereinafter referred to as pressure-sensitive adhesive sheets) are not sufficient in adhering strength to adherends having a rough surface (surface having a shape of irregularities), such as a concrete body, a mortar body, a gypsum board, a coniferous plywood, a woody cement plate, a calcium silicate plate, a tile, and a fiber-reinforced cement plate. Thus, in many cases, adhesives are used for these adherends, which each have a rough surface. In recent years, however, with an increase of needs that in an easier and simpler way these adherends are desired to be bonded and fixed to each other and any one of the adherends is desired to be bonded and fixed to some other adherend, it is strongly desired to use a laminated sheet, such as a pressure-sensitive adhesive sheet, to be joined also to these adherends, which have a rough surface.

Patent Document 1 discloses a pressure-sensitive adhesive sheet in which a rubbery pressure-sensitive-adhesive layer is laid which shows a good adhering strength to an adherend having a rough surface, such as a concrete body. However, for the formation of the rubbery pressure-sensitive-adhesive layer, it is necessary after the painting of this rubber pressure-sensitive adhesive to cure the painted adhesive. Thus, it is feared that a problem is caused from the viewpoint of producing efficiency. Moreover, a large quantity of a tackifier is added to the pressure-sensitive adhesive. Consequently, it is feared that the pressure-sensitive-adhesive layer is lowered in adhering strength at low temperature.

As a pressure-sensitive adhesive for which no curing is required, a pressure-sensitive adhesive containing a (meth)acrylic polymer is widely known. Patent Document 2 discloses pressure-sensitive adhesives for optical members in which various (meth)acrylates are used, respectively. However, this document does not disclose any adhering strength of the pressure-sensitive adhesives to an adherend as described above, which has a rough surface.

PRIOR ART DOCUMENTS

PATENT DOCUMENTS

Patent Document 1: JP-A-08-104847
Patent Document 2: WO 2013/099683

SUMMARY OF THE INVENTION

PROBLEMS TO BE SOLVED BY THE INVENTION

Laminated sheets as described above, such as a pressure-sensitive adhesive sheet used for an adherend having a rough surface, need to have a holding strength, as well as adhering strength, in order to hold a weight fixed to the adherend, in this fixed state, for a long term.

An object of the present invention is to provide a resin composition which can attain compatibility between a high adhering strength to an adherend having a rough surface and a high holding strength therefor.

Another object of the invention is to provide a resin layer made of/from the resin composition, and a laminated sheet having the resin layer.

MEANS FOR SOLVING THE PROBLEMS

In order to solve the above-mentioned problems, the inventors have repeated eager investigations to find out a resin composition described below. Thus, the present invention has been accomplished.

Thus, the present invention relates to a resin composition, comprising a (meth)acrylic polymer having a Tg of -40°C or lower and yielded by polymerizing monomer components comprising the following: 50 to 97% by weight of an alkyl (meth)acrylate (a1) having, as a terminal of its ester group, a branched alkyl group having 8 to 18 carbon atoms, a homopolymer made from the alkyl (meth)acrylate (a1) having a Tg of -50°C or lower; and 3 to 50% by weight of a (meth)acrylate (a2) having, in its molecular skeleton, an ether bond, a homopolymer made from the alkyl (meth)acrylate (a1) having a Tg of -40°C or lower.

In the resin composition of the present invention, it is preferred that a total proportion of the alkyl (meth)acrylate (a1) and the ether-bond-having (meth)acrylate (a2) is 75% or more by weight of all monomers from which the (meth)acrylic polymer is made.

In the resin composition of the present invention, it is preferred that the ether-bond-having (meth)acrylate (a2) is a monomer represented by general formula (1):

$$CH_2=CR^1\text{-}COO\text{-}(AO)_n\text{-}R^2$$

wherein $R^1$ is a hydrogen atom or a methyl group, AO is an alkyleneoxy group having 2 to 3 carbon atoms, n represents an average addition molar number of the alkyleneoxy group or alkyleneoxy groups equivalent thereto and is from 1 to 8, and $R^2$ is an aromatic ring, or a linear, branched or alicyclic alkyl group.

In the resin composition of the present invention, it is preferred that the monomer components further comprise at least one functional-group-having monomer selected from a hydroxyl-group-having monomer, a carboxyl-group-having monomer, and an epoxy-group-having monomer.

In the resin composition of the present invention, it is preferred that the monomer components further comprise a polyfunctional monomer in a proportion of 5% or less by weight of all (the) monomer components from which the (meth)acrylic polymer is made.

In the resin composition of the present invention, it is preferred that the weight-average molecular weight of the (meth)acrylic polymer is preferably 350000 or more.

The resin composition of the present invention preferably further includes a crosslinking agent in an amount of 0.01 to 5 parts by weight for 100 parts by weight of the (meth)acrylic polymer.

In the resin composition of the present invention, it is preferred that the crosslinking agent is an isocyanate crosslinking agent, and/or an epoxy crosslinking agent.

The present inventions relates to a resin layer, obtained from the resin composition.

In the resin layer of the present invention, it is preferred that the gel fraction of the resin layer is preferably from 20 to 95% by weight.

The present invention relates to a laminated sheet comprising a support, and the above-defined resin layer positioned on at least one side of the support.

In the laminated sheet of the present invention, it is preferred that the resin layer has a 180° peel adhering strength of 10 N/20-mm or more to an adherend under the following condition: a peel rate of 300 mm/minute.

In the laminated sheet of the present invention, it is preferred that the support is any one of a plastic film, a paper piece, a nonwoven cloth piece, and an air-bubble-contained sheet.

In the resin composition of the present invention, it is preferred that AO in the general formula (1) is an oxyethylene group.

In the resin composition of the present invention, it is preferred that in the general formula (1), n is preferably from 2 to 8.

In the resin composition of the present invention, it is preferred that $R^2$ in the general formula (1) is an unsubstituted aromatic ring, or linear, branched or alicyclic alkyl group having 1 to 6 carbon atoms.

In the resin composition of the present invention, it is preferred that the hydroxyl-group-having monomer is comprised in a proportion of 0.01 to 3% both inclusive by weight of all (the) monomers from which the (meth)acrylic polymer is made.

In the resin composition of the present invention, it is preferred that the carboxyl-group-having monomer is comprised in a proportion of 0.1 to 5% both inclusive by weight of all (the) monomers from which the (meth)acrylic polymer is made.

In the laminated sheet of the present invention, it is preferred that the adherend is any one of a concrete body, a mortar body, a gypsum board, a coniferous tree plywood sheet, a woody cement plate, a calcium silicate plate, a tile, and a fiber reinforced cement plate. The laminated sheet can strongly adhere and bond to any other smooth adherend.

The resin composition, the resin layer and the laminated sheet of the present invention are usable, for example, as a pressure-sensitive-adhesive composition, a pressure-sensitive-adhesive layer, and a pressure-sensitive adhesive sheet, respectively.

EFFECT OF THE INVENTION

In the resin composition of the present invention, the (meth)acrylic polymer, which is a main component, is yielded by polymerizing monomer components including an alkyl (meth)acrylate having a branched long-chain alkyl group, and a (meth)acrylate having an ether bond, the respective quantities of these (meth)acrylates being specified quantities. Furthermore, a homopolymer made from each of the alkyl (meth)acrylate, which has a branched long-chain alkyl group, and the (meth)acrylate, which has an ether bond, has a low glass transition temperature (Tg), and further the resultant (meth)acrylic polymer also has a low Tg. This resin composition allows to express a high adhering strength to an adherend having a rough surface and a high holding strength for this adherend by effect of the alkyl (meth)acrylate, which has a branched long-chain alkyl group, and the (meth)acrylate, which has an ether bond.

The alkyl (meth)acrylate having a branched alkyl group having 8 to 18 carbon atoms has a low Tg and an appropriate cohesive strength while the (meth)acrylate having an ether bond has a low Tg and an appropriate polarity and has an interaction with an adherend surface. As a result, the resin composition of the present invention has an appropriate softness, cohesive strength and interaction with an interface to be capable of exhibiting a high adhering strength to an adherend having a rough surface, and a high holding strength for the adherend. Such a presumption is made.

Moreover, when the resin composition of the present invention further includes a monomer having at least one functional group selected from hydroxyl-group-containing monomers, carboxyl-group-containing monomers, and epoxy-group-containing monomers, the formation of a crosslinked network and the control of interaction between the molecules can be attained while the softness of the resin layer is maintained. It is presumed that this matter allows to heighten the cohesive strength of the resin layer, and express a higher holding strength for an adherend having a rough surface.

Furthermore, when the gel fraction of the resin layer made from the resin composition of the present invention is, for example, from about 20 to 95% by weight, the softness of the resin layer can be maintained, and further cohesive strength can be given to the layer by the formation of an appropriate crosslinked network. It can be presumed that these matters enables that the resin layer expresses a higher adhering strength to an adherend having a rough surface and a higher holding strength for this adherend.

MODE FOR CARRYING OUT THE INVENTION

Hereinafter, embodiments of the present invention will be described in detail.

The resin composition of the present invention include a (meth)acrylic polymer having a Tg of -40°C or lower and yielded by polymerizing monomer components including the following: 50 to 97% by weight of an alkyl (meth)acrylate (a1) having, as a terminal of its ester group, a branched alkyl group having 8 to 18 carbon atoms, a homopolymer made from the alkyl (meth)acrylate (a1) having a Tg of -50°C or lower; and 3 to 50% by weight of a (meth)acrylate (a2) having, in its molecular skeleton, an ether bond, a homopolymer made from the alkyl (meth)acrylate (a2) having a Tg of -40°C or lower. The wording "(meth)acrylate" means an acrylate and/or a methacrylate.

<Alkyl (Meth)Acrylate (a1) Having, at Terminal of Its Ester Group, Branched Alkyl Group Having 8 to 18 Carbon Atoms>

About a homopolymer made from the alkyl (meth)acrylate (a1), which has, at a terminal of its ester group, a branched alkyl group having 8 to 18 carbon atoms, the Tg thereof is -50°C or lower. The Tg of the alkyl (meth)acrylate (a1) is preferably -55°C or lower, more preferably -60°C or lower to increase adhering strength to an adherend having a rough surface. The Tg of the alkyl (meth)acrylate (a1) is preferably -80°C or higher, more preferably -75°C or higher to increase power for holding an adherend having a rough surface. The number of the carbon atoms in the alkyl group of the alkyl (meth)acrylate (a1) is preferably from 8 to 16, more preferably from 8 to 14 to give an appropriate flexibility to the resin layer, and heighten the resin layer in cohesive power.

In the present invention, the Tg of the homopolymer made from each of the monomers is a numerical value described in "Polymer Handbook"(third version, John Wiley & Sons, Inc., 1989) (when the book includes numerical values thereabout, a conventional value out of the values is adopted; when the book includes no numerical value thereabout, a catalogue value of a company in which the monomer is produced is adopted).

The Tg of a monomer that is not described in the document is a value obtained by the following measuring method: Into a reactor equipped with a thermostat, a stirrer, a nitrogen-introducing tube and a reflux condenser are charged 100 parts by weight of the monomer, which is a measuring target, 0.1 parts by weight of azobisisobutyronitrile, 200 parts by weight of ethyl acetate as a polymerizing solvent. While nitrogen gas is charged thereinto, the components are stirred for one hour. In this way, oxygen in the polymerizing system is removed, and then the temperature of the system is raised to 60°C to react the reactive component for 12 hours. Next, the temperature of the system is cooled to room temperature. This homopolymer solution is cast and painted onto a peeling liner. The painted solution is dried to produce a testing sample (a sheet-form homopolymer) having a thickness of about 50 $\mu$m. From the resultant sample, a weight of 2 to 3 mg is collected, and then put into a vessel made of aluminum. The vessel is crimped to make a DSC measurement of the sample (using a device Q-2000, manufactured by TA Instruments Inc.). The measurement was made, using a temperature program from -80 to 150°C (measuring rate: 10°C/min.) in a nitrogen (50 mL/min.) atmosphere gas. From the resultant chart, the numerical value of the Tmg (middle glass transition temperature) was read out, and then this value was used as the Tg of the homopolymer.

Examples of the alkyl (meth)acrylate (a1) include 2-ethylhexyl acrylate (the number of the carbon atoms: 8; the Tg of the homopolymer: -70°C), isooctyl acrylate (the number of the carbon atoms: 8; the Tg of the homopolymer:-58°C), isononyl acrylate (the number of the carbon atoms: 9; the Tg of the homopolymer: -58°C), isodecyl acrylate (the number of the carbon atoms: 10; the Tg of the homopolymer:-60°C), isomyristyl acrylate (the number of the carbon atoms: 14; the Tg of the homopolymer: -56°C), isoundecyl acrylate, isododecyl acrylate, isopentadecyl acrylate, isohexadecyl acrylate, isoheptadecyl acrylate, and isooctadecyl acrylate; and respective methacrylates of these examples. These alkyl (meth)acrylates (a1) may be used singly or in any combination. The alkyl (meth)acrylate (a1) is preferably an alkyl acrylate from the viewpoint of the adhering strength of the resin layer, and the polymerization reactivity of the (meth)acrylate.

<(Meth)acrylate (a2) Having, in Its Molecular Skeleton, Ether Bond>

About a homopolymer made from the ether-bond-having (meth)acrylate (a2) in the present invention, the Tg thereof is -40°C or lower. The Tg of the ether-bond-having (meth)acrylate (a2) is preferably -45°C or lower, more preferably -50°C or lower to increase adhering strength to an adherend having a rough surface. The Tg of the ether-bond-having (meth)acrylate (a2) is preferably -90°C or higher, more preferably -80°C or higher to increase adhering power and holding power to an adherend having a rough surface. The wording "ether-bond" or "ether bond" herein means a chain-form ether bond, and is different from any cyclic ether bond of an epoxy group, an oxetane group or the like.

As the ether-bond-having (meth)acrylate (a2), the following is usable without any limitation: a compound having an unsaturated double bond of a (meth)acryloyl group and further having a chain-form ether bond. The ether-bond-having (meth)acrylate (a2) is, for example, a monomer represented by general formula (1):

$$CH_2=CR^1\text{-}COO\text{-}(AO)_n\text{-}R^2$$

wherein $R^1$ is a hydrogen atom or a methyl group, AO is an alkyleneoxy group having 2 to 3 carbon atoms, n represents an average addition molar number of the alkyleneoxy group or alkyleneoxy groups equivalent thereto and is from 1 to 8, and $R^2$ is an aromatic ring, or a linear, branched or alicyclic alkyl group (provided that $R^2$ in the general formula (1) contains no ether bond). Such ether-bond-having (meth)acrylates (a2) may be used singly or in any combination.

Examples of the monomer represented by the general formula (1) include methoxypolyethylene glycol (meth)acrylate, ethoxypolyethylene glycol (meth)acrylate, and propoxypolyethylene glycol (meth)acrylate which each have oxyethylene groups the average addition molar number of which is from 1 to 8. Other examples thereof include methoxypolyethylene glycol (meth)acrylate, ethoxypolyethylene glycol (meth)acrylate, and propoxypolyethylene glycol (meth)acrylate which each have oxypropylene groups the average addition molar number of which is from 1 to 8.

In the formula (1), AO(s) is/are (each) preferably an oxyethylene group, which is an alkyleneoxy group having 2 carbon atoms in order for the compound to have an appropriate polarity balance. In the general formula (1), n is preferably from 2 to 8, more preferably from 2 to 5 from the viewpoint of the polarity level and the polymerization reactivity of the compound. Specific examples of the compound include ethyl carbitol acrylate (ethoxy ethoxy ethyl acrylate)) (Tg of a homopolymer made therefrom = -67°C), and methoxytriethylene glycol acrylate (Tg of a homopolymer made therefrom = - 57°C).

In the general formula (1), $R^2$ is preferably an unsubstituted aromatic ring, or a linear, branched or alicyclic alkyl group. The aromatic ring of $R^2$ is, for example, a phenyl group; and the linear or branched of $R^2$ is, for example, an isopropyl, ethyl or methyl group, and the alicyclic alkyl group of $R^2$ is, for example, a cyclopentyl group. Out of these examples, the linear alkyl group is preferred. $R^2$ preferably has 1 to 6 carbon atoms, more preferably has 1 to 5 carbon atoms in order for the compound to have an appropriate polarity.

In the present invention, the proportion of the alkyl (meth)acrylate (a1) is from 50 to 97% by weight of all monomer components from which the (meth)acrylic polymer. The proportion of the alkyl (meth)acrylate (a1) is preferably 55% or more, more preferably 58% or more, even more preferably 59% or more by weight of all the monomer components from which the (meth)acrylic polymer to increase adhering power and holding power to an adherend having a rough surface. The proportion of the alkyl (meth)acrylate (a1) is preferably 95% or less, more preferably 93% or less, even more preferably 91% or less by weight of all the monomer components from which the (meth)acrylic polymer to increase adhering power and holding power to an adherend having a rough surface.

In the present invention, the proportion of the ether-bond-having (meth)acrylate (a2) is from 3 to 50% by weight of all the monomers from which the (meth)acrylic polymer is made. The proportion of the ether-bond-having (meth)acrylate (a2) is preferably 3.5% or more, more preferably 4% or more, even more preferably 4.5% or more by weight of all the monomers from which the (meth)acrylic polymer is made to increase adhering power and holding power to an adherend having a rough surface. The proportion of the ether-bond-having (meth)acrylate (a2) is preferably 48% or less, more preferably 45% or less, even more preferably 40% or less by weight of all the monomers from which the (meth)acrylic polymer is made to increase adhering power and holding power to an adherend having a rough surface.

In the present invention, the total proportion of the alkyl (meth)acrylate (a1) and the ether-bond-having (meth)acrylate (a2) is preferably 75% or more by weight. The total proportion of the alkyl (meth)acrylate (a1) and the ether-bond-having (meth)acrylate (a2) is more preferably 80% or more, even more preferably 85% or more, even more preferably 90% or more by weight of all the monomers from which the (meth)acrylic polymer is made to increase adhering power and holding power to an adherend having a rough surface.

<Functional-Group-Having Monomer>

The monomer components from which the (meth)acrylic polymer in the present invention is made may include at least one functional-group-containing monomer selected from a hydroxyl-group-having monomer, a carboxyl-group-having monomer, and an epoxy-group-having monomer.

As the hydroxyl-group-having monomer, the following is usable without any limitation: a monomer which has a polymerizable functional group having a saturated double bond, such as a (meth)acryloyl group or vinyl group, and further which has a hydroxyl group. Examples of the hydroxyl-group-containing monomer include 2-hydroxyethyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and other hydroxyalkyl (meth)acrylates; and (4-hydroxymethylcyclohexyl)methyl (meth)acrylate, and other hydroxylalkylcycloalkane (meth)acrylate. Other examples thereof include hydroxyethyl (meth)acrylamide and allyl alcohol, 2-hydroxyethyl vinyl ether, 4-hydroxybutyl vinyl ether, and diethylene glycol monovinyl ether. These hydroxyl-group-containing monomers may be used singly or in any combination. Out of such hydroxyl-group-containing monomers, preferred are hydroxyalkyl (meth)acrylates, and particularly preferred are 2-hydroxyethyl (meth)acrylate, and 4-hydroxybutyl (meth)acrylate.

As the carboxyl-group-containing monomer, the following is usable without any limitation: a monomer which has a polymerizable functional group having a saturated double bond, such as a (meth)acryloyl group or vinyl group, and further which has a carboxyl group. Examples of the carboxyl-group-containing monomer include (meth)acrylic acid, carboxyethyl (meth)acrylate, carboxypentyl (meth)acrylate, itaconic acid, maleic acid, fumaric acid, crotonic acid, and isocrotonic acid. These carboxyl-group-containing monomers may be used singly or in any combination. Out of these examples, acrylic acid and methacrylic acid are preferred, and acrylic acid is particularly preferred.

As the epoxy-group-containing monomer, the following is usable without any limitation: a monomer which has a polymerizable functional group having a saturated double bond, such as a (meth)acryloyl group or vinyl group, and further which has an epoxy group. Examples of the epoxy-group-containing monomer include glycidyl (meth) acrylate, 3,4-epoxycyclohexylmethyl (meta)acrylate and 4-hydroxybutyl (meth)acrylate glycidyl ether. These epoxy-group-containing monomers may be used singly or in any combination.

In the present invention, the proportion of the hydroxyl-group-containing monomer is preferably 0.01% or more, more preferably 0.03% or more by weight of all the monomers from which the (meth)acrylic polymer is made to heighten the resin layer in cohesive strength. The proportion of the hydroxyl-group-containing monomer is preferably 3% or less, more preferably 2% or less by weight of all the monomers from which the (meth)acrylic polymer is made to restrain an excessive rise in the viscosity of the polymer, and the gelatinization of the polymer.

In the present invention, the proportion of the carboxyl-group-containing monomer is preferably 0.1% or more, more preferably 0.2% or more by weight of all the monomers from which the (meth)acrylic polymer is made to heighten in cohesive strength and give a molecular interaction with the surface of an adherend. The proportion of the carboxyl-group-containing monomer is preferably 5% or less, more preferably 3% or less, even more preferably 2% or less by weight of all the monomers from which the (meth)acrylic polymer is made to heighten in performance of following a rough surface or keep the adhesive strength of the resin layer at a high level at low temperature.

In the present invention, the proportion of the epoxy-group-containing monomer is preferably 0.1% or more, more preferably 0.2% or more by weight of all the monomers from which the (meth)acrylic polymer is made to heighten in cohesive strength. The proportion of the epoxy-group-containing monomer is preferably 1% or less, more preferably 0.5% or less by weight of all the monomers from which the (meth)acrylic polymer is made to restrain the gelatinization of the resin composition and a rise in the viscosity thereof. When the (meth)acrylic polymer is a graft polymer, this matter is not applied thereto.

<Copolymerizable Monomer>

The monomer components from which the (meth)acrylic polymer is made in the present invention may include a copolymerizable monomer other than the above-mentioned functional-group-having monomers. The copolymerizable monomer is, for example, a monomer represented by general formula (2): $CH_2=CR^3\text{-}COO\text{-}R^4$ wherein $R^3$ represents a hydrogen atom or a methyl group, and $R^4$ represents a substituted or unsubstituted alkyl group having 1 to 24 carbon atoms. However, any case is excluded in which $R^4$ is a branched alkyl group having 8 to 18 carbon atoms. Such copolymerizable monomers may be used singly or in any combination.

In the general formula (2), the substituted or unsubstituted alkyl group having 1 to 24 carbon atoms (more preferably 1 to 18 carbon atoms), as $R^4$, represents a linear or branched alkyl group, or a cyclic cycloalkyl group provided that any case is excluded in which $R^4$ is a branched alkyl group having 8 to 18 carbon atoms. Specific examples of $R^4$ include linear alkyl groups each having 1 to 18 carbon atoms, branched alkyl groups each having 3 to 7 carbon atoms, and cyclic alkyl groups. In the case of the substituted alkyl group, its substituent is preferably an aryl group having 3 to 7 carbon atoms, or an aryloxy group having 3 to 7. The aryl group is not limited, and is preferably a phenyl group.

Examples of the monomer represented by the general formula (2) include methyl (meth)acrylate, ethyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, n-octyl (meth)acrylate, n-nonyl (meth)acrylate, phenoxyethyl (meth)acrylate, benzyl (meth)acrylate, cyclohexyl (meth)acrylate, 3,3,5-trimethylcyclohexyl (meth)acrylate, isobornyl (meth)acrylate, terpene (meth)acrylate, and dicyclopentanyl (meth)acrylate.

As the copolymerizable monomer, the following are also usable: vinyl acetate, vinyl propionate, styrene, $\alpha$-methylstyrene, N-vinylcaprolactam, N-vinylpyrrolidone, and other vinyl monomers; tetrahydrofurfuryl (meth)acrylate, fluorine-containing acrylates, silicone (meth)acrylates, 2-methoxyethyl acrylate, and other acrylate monomers; and amide-group-containing monomers, amino-group-containing monomers, imide-group-containing monomers, N-acryloylmorpholine, and vinyl ether monomers.

Furthermore, the copolymerizable monomer may be a silicon-atom-containing silane monomer. Examples of the silane monomer include 3-acryloxypropyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

In the present invention, the proportion of the copolymerizable monomer is preferably 20% or less, more preferably 15% or less by weight of all the monomers from which the (meth)acrylic polymer is made. If the content of the copolymerizable monomer is more than 20% by weight, for example, the resin layer may be lowered in adhesion onto a rough surface.

<Polyfunctional Monomer>

The monomer components from which the (meth)acrylic polymer in the present invention is made may optionally include a polyfunctional monomer to adjust the cohesive strength of the resin composition. Such polyfunctional monomers may be used singly or in combination.

The polyfunctional monomer is a monomer having at least two polymerizable functional groups each having an unsaturated double bond, such as (meth)acryloyl groups or vinyl groups. Examples of the monomer include (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethylene glycol di(meth)acrylate, 1,6-hexanediol di(meth)acrylate and 1,12-dodecanediol di(meth)acrylate, trimethylolpropane tri(meth)acrylate, tetramethylolmethane tri(meth)acrylate, and other esterified compounds each made from a polyhydric alcohol and (meth)acrylic acid; and allyl (meth)acrylate, vinyl (meth)acrylate, divinylbenzene, epoxy acrylates, polyester acrylates, urethane acrylates, butyl di(meth)acrylate, and hexyl di(meth)acrylate. Out of these examples, preferred are trimethylolpropane tri(meth)acrylate, hexanediol di(meth)acrylate and dipentaerythritol hexa(meth)acrylate.

The proportion of the polyfunctional monomer may be 5% or less by weight of all the monomers from which the (meth)acrylic polymer is made. The proportion of the polyfunctional monomer is preferably 3% or less, more preferably 2% or less by weight of all the monomers from which the (meth)acrylic polymer is made although the (more) preferred proportion is varied in accordance with, for example, the molecular weight of the monomer, and the number of functional groups therein. If the content of the polyfunctional monomer is more than 5% by weight, for example, the resin composition may become too high in elastic modulus to be lowered in adhering strength.

<(Meth)acrylic Polymer, and Method for Producing the Same>

The Tg of the (meth)acrylic polymer in the present invention is -40°C or lower. The Tg of the (meth)acrylic polymer is preferably -45°C or lower, more preferably -50°C or lower to heighten adhering strength to an adherend having a rough surface. The Tg of the (meth)acrylic polymer is preferably -85°C or higher, more preferably -80°C or higher to heighten adhering strength to an adherend having a rough surface and in holding strength therefor. The Tg of the (meth)acrylic polymer is a theoretical value obtained by a calculation according to the Fox equation described below, using monomer units of which the (meth)acrylic polymer is made, and the respective proportions thereof.

Fox equation: $1/Tg = W_1/Tg_1 + W_2/Tg_2 + \ldots \ldots \ldots + W_n/Tg_n$ wherein Tg represents the glass transition temperature (unit: K) of the (meth) acrylic polymer; Tgi (i = 1, 2, ... ... ... n), the glass transition temperature (unit: K) of a homopolymer made from each "i" of the monomers; and $W_i$ (i = 1, 2, ... ... ... n), the percentage by mass of each "i" of the monomers.

For the production of the (meth)acrylic polymer, a known producing method is appropriately selectable, examples thereof including solution polymerization, radial polymerization by an electron beam, UV rays or the like, bulk polymerization, emulsion polymerization, and various radical polymerizations. The obtained (meth)acrylic polymer may be any one of a random copolymer, a block copolymer, a graft copolymer, and others.

The polymerization initiator, a chain transfer agent, an emulsifier and others that are used in each of the radical polymerizations are not particularly limited, and are appropriately selectable to be used. The weight-average molecular weight of the (meth)acrylic polymer is controllable in accordance with the use amounts of the polymerization initiator and the chain transfer agent, and conditions for the reaction. Correspondingly to the kinds of these components, the use amounts thereof are appropriately adjusted.

In the solution polymerization, as a polymerizing solvent, for example, ethyl acetate or toluene is used. In a specific example of the solution polymerization, a reaction therefor is conducted in the presence of an added polymerization initiator under the flow of an inert gas such as nitrogen ordinarily under conditions of a temperature of about 50 to 70°C and a period of about 5 to 30 hours.

Examples of the polymerization initiator include 2,2'-azobisisobutyronitrile, 2,2'-azobis (2-amidinopropane) dihydrochloride, 2,2'-azobis[2-(5-methyl-2-imidazoline-2-yl)propane] dihydrochloride, 2,2'-azobis(2-methylpropionamidine) disulfate, 2,2'-azobis(N,N'-dimethyleneisobutylamidine), 2,2'-azobis[N-(2-carboxyethyl)-2-methylpropionamidine] hydrate (VA-057, manufactured by Wako Pure Chemical Industries, Ltd.), and other azo initiators; potassium persulfate, ammonium persulfate, and other persulfates; di(2-ethylhexyl) peroxydicarbonate, di(4-t-butylcyclohexyl) peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutyl peroxy-2-ethylhexanoate, di(4-methylbenzoyl) peroxide, dibenzoyl peroxide, t-butyl peroxyisobutyrate, 1,1-di(t-hexylperoxy)cyclohexane, t-butyl hydroperoxide, hydrogen peroxide, and other peroxide initiators; and any combination of a persulfate with sodium hydrogensulfite; any combination of a peroxide with a reducing agent, such as a combination of a peroxide with sodium ascorbate; and other redox initiators in each of which a peroxide is combined with a reducing agent. However, the polymerization initiator is not limited to these examples.

These polymerization initiators may be used singly or in combination. The use amount of the whole thereof is preferably from about 0.005 to 1 part, more preferably from about 0.01 to 0.5 parts by weight for 100 parts by weight of the monomer components.

The polymerization initiator is preferably, for example, 2,2'-azobisisobutyronitrile.

Examples of the chain transfer agent include laurylmercaptan, glycidylmercaptan, mercaptoacetic acid, 2-mercaptoethanol, thioglycolic acid, 2-ethylhexyl thioglycolate, and 2,3-dimercapto-1-propanol. Such chain transfer agents may be used singly or in the form of a mixture of two or more thereof. The use amount of the whole thereof is about 0.1 parts or less by weight for 100 parts of the total of the monomer components.

Examples of the emulsifier used in the above-mentioned emulation polymerization include sodium laurylsulfate, ammonium laurylsulfate, sodium dodecylbenzenesulfonate, sodium polyoxyethylene alkyl ether sulfate, sodium polyoxyethylene alkyl phenyl ether sulfate, and other anionic emulsifiers; and polyoxyethylene alkyl ether, polyoxyethylene alkyl phenyl ether, polyoxyethylene fatty acid esters, polyoxyethylene-polyoxypropylene block polymers, and other nonionic emulsifiers. These emulsifiers may be used singly or in combination.

Specific examples of an emulsifier into which a radical polymerizable functional group, such as a propenyl group or allyl ether group, is introduced, as the reactive emulsifier, include AQUALONs HS-10, HS-20, KH-10, BC-05, BC-10, and BC-20 (each manufactured by Dai-ichi Kogyo Seiyaku Co., Ltd.); and ADEKALIA SOAP SE10N (manufactured by Adeka Corp.). The reactive emulsifier is favorable since the emulsifier is incorporated into the resultant polymer chain after the monomer components are polymerized, so that the polymer becomes good in water resistance. The use amount of the emulsifier is from 0.3 to 5 parts, more preferably from 0.5 to 1 part by weight for 100 parts by weight of the total of the monomer components from the viewpoint of the polymerization stability and the mechanical stability of the resultant polymer.

When the (meth)acrylic polymer is produced by radial ray polymerization, the polymer can be produced by irradiating the monomer components with radial rays such as an electron beam or UV rays. When the radial ray polymerization is conducted using an electron beam, it is particularly needless to incorporate a photopolymerization initiator into the monomer components. However, when the radial ray polymerization is UV polymerization, a photopolymerization initiator may be incorporated into the monomer components, particularly, for an advantage that the polymerization time can be shortened, and other advantages.

Such photopolymerization initiators may be used singly or in combination.

The photopolymerization initiator(s) is/are not (each) particularly limited as far as the photopolymerization initiator is a substance for initiating the photopolymerization. The photopolymerization initiator may be an ordinarily used photopolymerization initiator. Examples thereof include benzoin ether based, acetophenone based, $\alpha$-ketol based, photoactive oxime based, benzoin based, benzyl based, benzophenone based, ketal based, and thioxanthone based photopolymerization initiators. The use amount of the photopolymerization initiator(s) is from 0.05 to 1.5 parts, preferably from 0.1 to 1 part by weight for 100 parts by weight of the monomer components.

The weight-average molecular weight of the (meth)acrylic polymer in the present invention is preferably 350000 or more. The weight-average molecular weight of the (meth)acrylic polymer is more preferably 400000 or more, even more preferably 500000 or more to heighten the resin layer in endurance and cohesive strength. The weight-average molecular weight of the (meth)acrylic polymer is preferably 3000000 or less, more preferably 2500000 or less, even more preferably 2000000 or less, even more preferably 1500000 or less, even more preferably 1200000 or less to heighten the bonding performance and the adhesive strength of the resin layer and restrain the viscosity of the resin composition.

The weight-average molecular weight of the (meth)acrylic polymer can be measured by GPC (gel permeation chromatography), and then calculated in terms of polystyrene. A sample thereof was dissolved into tetrahydrofuran to be turned to a solution having a concentration of 0.1% by weight, and this was allowed to stand still overnight. The solution was filtrated through a 0.45-$\mu$m-membrane filter. The resultant filtrate is used.

Analyzer: HLC-8120GPC, manufactured by Tosoh Corp.,

Columns: (Meth)acrylic polymers: GM7000HXL + GMHXL + GMHXL, manufactured by Tosoh Corp.,

Aromatic polymers: G3000HXL+2000HXL+G1000HXL,

Size of each of the columns: 7.8 mm in diameter x 30 cm; total: 90 cm, Eluent: Tetrahydrofuran (concentration: 0.1% by weight),

Flow rate: 0.8 mL/min.,

Inlet pressure: 1.6 MPa,

Detector: differential reflector (RI),

Column temperature: 40°C,

Injected volume: 100 $\mu$L,

Eluent: tetrahydrofuran,

Detector through differential refractive index, and

Standard sample: polystyrene.

<Crosslinking Agent>

The resin composition of the present invention may include a crosslinking agent. Examples of the crosslinking agent include isocyanate crosslinking agents, epoxy crosslinking agents, silicone crosslinking agents, oxazoline crosslinking agents, aziridine crosslinking agents, silane crosslinking agents, alkyl-etherified melamine crosslinking agents, metal chelate crosslinking agents, and peroxide crosslinking agents. The crosslinking agent is preferably any isocyanate crosslinking agent or epoxy crosslinking agent.

Such crosslinking agents may be used singly or in combination. About the content of the whole thereof, the crosslinking agent(s) is/are contained in the (meth)acrylic polymer in an amount preferably from 0.01 to 5 parts by weight for 100 parts by weight of the (meth)acrylic polymer. The content of the crosslinking agent(s) is more preferably from 0.01 to 4 parts by weight, more preferably from 0.02 to 3 parts by weight. As the crosslinking agent, the above-mentioned polyfunctional monomer is also usable. In this case, this polyfunctional monomer is included in the (meth)acrylic polymer in an amount preferably from 0.001 to 2 parts, more preferably from 0.003 to 1 part by weight for 100 parts by weight of the (meth)acrylic polymer.

The isocyanate crosslinking agents are each a compound containing, in a single molecule thereof, two or more isocyanate groups (the groups may be isocyanate-reproducing functional groups, in which isocyanate groups are temporarily protected with a blocking agent or by being multimerized).

Examples of the isocyanate crosslinking agents include tolylene diisocyanate, xylylene diisocyanate and other aromatic isocyanates; isophorone diisocyanate and other alicyclic isocyanates; and hexamethylene diisocyanate and other aliphatic isocyanates.

More specific examples of the isocyanate crosslinking agents include butylene diisocyanate, hexamethylene diisocyanate and other lower aliphatic polyisocyanates; cyclopentylene diisocyanate, cyclohexylene diisocyanate, isophorone diisocyanate and other alicyclic isocyanates; 2,4-tolylene diisocyanate, 4,4'-diphenylmethane diisocyanate, xylylene diisocyanate, polymethylene polyphenyl isocyanate and other aromatic diisocyanates; a trimethylolpropane/tolylene diisocyanate trimer adduct (trade name: CORONATE L, manufactured by Nippon Polyurethane Industry Co., Ltd., a trimethylolpropane/hexamethylene diisocyanate trimer adduct (trade name: CORONATE HL, manufactured by Nippon Polyurethane Industry Co., Ltd.), an isocyanurate product of hexamethylene diisocyanate (trade name: CORONATE HX, manufactured by Nippon Polyurethane Industry Co., Ltd.), and other isocyanate adducts; a trimethylolpropane adduct of xylylene diisocyanate (trade name: TAKENATE D110N, manufactured by Mitsui Chemicals, Inc.), a trimethylolpropane adduct of xylylene diisocyanate (trade name: TAKENATE D120N, manufactured by Mitsui Chemicals, Inc.), a trimethylolpropane adduct of isophorone diisocyanate (trade name: TAKENATE D140N, manufactured by Mitsui Chemicals, Inc.), a trimethylolpropane adduct of hexamethylene diisocyanate adduct (trade name: TAKENATE D160N, manufactured by Mitsui Chemicals, Inc.); polyether polyisocyanates, polyester polyisocyanates, and adducts each made from any one of these examples with any one of various polyols; and polyisocyanates each yielded by multimerizing a polyisocyanate with, for example, an isocyanurate bond, a biuret bond or allophanate bond.). Out of these examples, the use of aromatic isocyanates and alicyclic isocyanates is preferred to cause the resin composition to express properties about adhesive strength and holding strength with a good balance.

Such isocyanate crosslinking agents may be used singly or in combination. About the content of the whole thereof, the isocyanate crosslinking agent(s) is/are contained in the (meth)acrylic polymer in an amount preferably from 0.01 to 5 parts, more preferably from 0.03 to 4 parts, even more preferably from 0.05 to 3 parts, even more preferably from 0.08 to 2 parts by weight for 100 parts by weight of the (meth)acrylic polymer. The crosslinking agent(s) may be appropriately incorporated into the resin composition, considering the cohesive strength, the inhibition of a peel of this layer in an endurance test, and other.

In a liquid in which the (meth)acrylic polymer modified is dispersed in water, this liquid being produced in the above-mentioned emulsion polymerization, no isocyanate crosslinking agent may be used. However, as required, a blocked isocyanate crosslinking agent may be used since this crosslinking agent is easily reactive with water.

The above-mentioned epoxy crosslinking agents are each a polyfunctional epoxy compound having, in a single molecule thereof, two or more epoxy groups. Examples of the epoxy crosslinking agents include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, diglycidyl adipate, diglycidyl o-phthalate, triglycidyl-tris(2-hydroxyethyl) isocyanurate, resorcin diglycidyl ether, bisphenol-S-diglycidyl ether, and epoxy resins each having, in one molecule thereof, two or more epoxy groups. Examples of the epoxy crosslinking agents also include commercially available products such as products having, respectively, trade names "TETRAD C" and "TETRAD X", manufactured by Mitsubishi Gas Chemical Co., Inc.

Such epoxy crosslinking agents may be used singly or in combination. About the content of the whole thereof, the epoxy crosslinking agent(s) is/are contained in the (meth)acrylic polymer in an amount preferably from 0.005 to 1 part, more preferably from 0.01 to 0.5 parts, even more preferably from 0.015 to 0.3 parts by weight for 100 parts by weight of the (meth)acrylic polymer. The crosslinking agent(s) may be appropriately incorporated into the resin composition, considering the cohesive strength, the inhibition of a peel of this layer in an endurance test, and other.

As the peroxide, an appropriately selected peroxide is usable as far as the peroxide is a peroxide which is heated or irradiated with light to generate a radical active species to advance the crosslinkage of the base polymer of the pressure-sensitive-adhesive composition. Considering the workability and stability of the peroxide, it is preferred to use a peroxide about which the one-minute half-life temperature is from 80 to 160°C. More preferably, a peroxide about which the one-minute half-life temperature is from 90 to 140°C is used.

Usable examples of the peroxide include di(2-ethylhexyl) peroxydicarbonate (one-minute half-life temperature: 90.6°C), di(4-t-butylcyclohexyl) peroxydicarbonate (1 minute half-life temperature: 92.1°C), di-sec-butyl peroxydicarbonate (one-minute half-life temperature: 92.4°C), t-butyl peroxyneodecanoate (one-minute half-life temperature: 103.5°C), t-hexyl peroxypivalate (one-minute half-life temperature: 109.1°C), t-butyl peroxypivalate (one-minute half-life temperature: 110.3°C), dilauroyl peroxide (one-minute half-life temperature: 116.4°C), di-n-octanoyl peroxide (one-minute half-life temperature: 117.4°C), 1,1,3,3-tetramethylbutylperoxy-2-ethyl hexanoate (one-minute half-life temperature: 124.3°C), di(4-methylbenzoyl) peroxide (one-minute half-life temperature: 128.2°C), dibenzoyl peroxide (one-minute half-life temperature: 130.0°C), t-butyl peroxyisobutyrate (one minute half-life temperature: 136.1°C), and 1,1-di(t-hexylperoxy)cyclohexane (one-minute half-life temperature: 149.2°C). Out of these examples, particularly preferred are di(4-t-butylcyclohexyl) peroxydicarbonate (one-minute half-life temperature: 92.1°C), dilauroyl peroxide (one-minute half-life temperature: 116.4°C), dibenzoyl peroxide (one-minute half-life temperature: 130.0°C) and the like since these compounds are excellent in crosslinking reaction efficiency.

The half-life (period) of each of the peroxides is an index representing the decomposition rate of the peroxide, and denotes a period until the remaining quantity of the peroxide is reduced by half. The decomposition temperature of the peroxide at which the half-life is gained in any period, and the half-life period at any temperature are described in, for example, maker's catalogue, and are described in, for example, "Organic Peroxide Catalogue 9th version (2003, May)" published by Japan Oils & Fats Co., Ltd.

The peroxides may be used singly or in combination. About the content of the whole thereof, the peroxide(s) is/are contained in the (meth)acrylic polymer in an amount preferably from 0.02 to 2 parts, more preferably from 0.05 to 1 part for 100 parts by weight of the (meth)acrylic polymer. The content is appropriately selected in any one of these ranges for the adjustment of the workability, the reworkability and the crosslinkage stability of the resin composition, the peelability of the resin layer, and others.

In a method for measuring the remaining peroxide decomposition quantity after the reaction treatment, the quantity is measurable, for example, by HPLC (high performance chromatography). Specifically, for example, each weight of about 0.2 g is taken out from the resin layer after the reaction treatment. The taken-out sample is immersed in 10 mL of ethyl acetate. The immersed sample is shaken in a shaker at 25°C and 120 rpm for 3 hours to extract the peroxide. Thereafter, the extracted peroxide is allowed to stand still at room temperature for 3 days. Next, thereto is added 10 mL of acetonitrile, and the resultant is shaken at 25°C and 120 rpm for 30 minutes. The resultant is filtrated through a membrane filter (0.45 $\mu$m), and then about 10 $\mu$L of the resultant extract is poured into HPLC to make an analysis. In this way, the peroxide quantity after the reaction treatment can be gained.

Examples of the metal chelate crosslinking agents include polyfunctional metal chelates in each of which a polyvalent metal is covalent-bonded or coordination-bonded to an organic compound. Examples of the polyvalent metal include Al, Cr, Zr, Co, Cu, Fe, Ni, V, Zn, In, Ca, Mg, Mn, Y, Ce, Sr, Ba, Mo, La, Sn, and Ti. The covalent-bonded or coordination-bonded atom in the organic compound is, for example, an oxide atom. Examples of the organic compound include alkyl esters, alcohol compounds, carboxylic acid compounds, ether compounds, and ketone compounds.

A (meth)acrylic oligomer may be incorporated into the resin composition of the present invention to improve the composition in adhering strength. The (meth)acrylic oligomer is preferably a polymer which is higher in Tg and smaller in weight-average molecular weight than the (meth)acrylic polymer in the present invention. The (meth)acrylic oligomer can function as a tackifying resin, and further improve the resin composition in adhering strength.

About the (meth)acrylic oligomer, it is desired that the Tg thereof is from about 0 to 300°C both inclusive, preferably from about 20 to 300°C both inclusive, more preferably from about 40 to 300°C both inclusive. If the Tg is lower than about 0°C, the resin layer may be lowered in cohesive strength at room temperature or higher to be lowered in holding property, and high-temperature adhesion. The Tg of the (meth)acrylic oligomer is a theoretical value calculated on the basis of the Fox equation in the same manner as the Tg of (meth)acrylic polymer.

The weight-average molecular weight of the (meth)acrylic oligomer is 1000 or higher, and lower than 30000, preferably 1500 or more, and lower than 20000, more preferably 2000 or more, and lower than 10000. If the weight-average molecular weight is 30000 or more, the resin layer may not sufficiently gain an adhering-strength-improving effect. If the weight-average molecular weight is less than 1000, the oligomer becomes small in molecule, so that the resin layer may be lowered in adhering strength and holding property. In the measurement of the weight-average molecular weight of the (meth)acrylic oligomer in the present invention, the molecular weight can be gained in terms of polystyrene by a GPC method. Specifically, in a device HPLC 8020 manufactured by Tosoh Corp., two columns TSKgelGMH-H(20) are used to measure the molecular weight through a tetrahydrofuran solvent under a condition of a flow rate of about 0.5 mL/minute.

Examples of a monomer from which the (meth)acrylic oligomer is made include methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, 2-ethylhexyl (meth)acrylate, heptyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, and other alkyl (meth)acrylates; cyclohexyl (meth)acrylate, isobornyl (meth)acrylate, dicyclopentanyl (meth)acrylate, and other esters each made from (meth)acrylic acid and an alicyclic alcohol; phenyl (meth)acrylate, benzyl (meth)acrylate, and other aryl (meth)acrylates; and (meth)acrylates each yielded from a terpene compound derivative alcohol. Such (meth)acrylates may be used singly or in any combination of two or more thereof.

The (meth)acrylic oligomer is preferably an oligomer including, as monomer units, acrylic monomers each having a relatively bulky structure. Typical examples thereof include alkyl (meth)acrylates in each of which the alkyl group has a branched structure, such as cyclohexyl (meth)acrylate, isobutyl (meth)acrylate and t-butyl (meth)acrylate; esters each made from (meth)acrylic acid and an alicyclic alcohol, such as isobornyl (meth)acrylate and dicyclopentanyl (meth)acrylate; and (meth)acrylates each having a cyclic structure, such as phenyl (meth)acrylate, benzyl (meth)acrylate, and other aryl (meth)acrylates. By causing the (meth)acrylic oligomer to have such a bulky structure, the resin layer can be further improved in adhesion. From the viewpoint of, in particular, bulkiness, a (meth)acrylic oligomer having a cyclic structure is high in advantageous effect, and a (meth)acrylic oligomer having plural cycles is higher in advantageous effect. A monomer having a saturated bond is preferred since polymerization inhibition is not easily caused in the case of adopting ultraviolet rays (ultraviolet rays) when the (meth)acrylic oligomer is synthesized or the resin layer is produced. It is preferred to use, as a monomer from which the (meth)acrylic oligomer is made, an alkyl (meth)acrylate in which the alkyl group has a branched structurer an ester of an acyclic alcohol.

From such a viewpoint, preferred examples of the (meth)acrylic oligomer include a copolymer made from cyclohexyl methacrylate (CHMA) and isobutyl methacrylate (IBMA), a copolymer made from cyclohexyl methacrylate (CHMA) and isobornyl methacrylate (IBXMA), a copolymer made from cyclohexyl methacrylate (CHMA) and acryloylmorpholine (ACMO), a copolymer made from cyclohexyl methacrylate (CHMA) and diethyl acrylamide (DEAA), a copolymer made from 1-adamantyl acrylate (ADA) and methyl methacrylate (MMA), a copolymer made from dicyclopentanyl methacrylate (DCPMA) and isobornyl methacrylate (IBXMA), and a copolymer made from dicyclopentanyl methacrylate (DCPMA), cyclohexyl methacrylate (CHMA), isobornyl methacrylate (IBXMA), isobornyl acrylate (IBXA) or dicyclopentanyl methacrylate (DCPMA), and methyl methacrylate (MMA); and respective homopolymers made from dicyclopentanyl acrylate (DCPA), 1 - adamantyl methacrylate (ADMA), and 1-adamantyl acrylate (ADA). Particularly preferred are oligomers each containing, as a main component, CHMA.

When the (meth)acrylic oligomer is used in the resin composition of the present invention, the content thereof is not particularly limited. The content is preferably 70 parts or less, more preferably from 1 to 70 parts, even more preferably from 2 to 50 parts, even more preferably from 3 to 40 parts by weight for 100 parts by weight of the (meth)acrylic polymer. If the addition amount of the (meth)acrylic oligomer is more than 70 parts by weight, the resin layer may become too high in elastic modulus to be deteriorated in adhesion at low temperature, so that an inconvenience may be caused. It is effective from the viewpoint of an adhesion-improving effect of the resin layer to blend 1 part or more by weight of the (meth)acrylic oligomer into the resin composition.

The resin composition of the present invention may include a tackifier to improve the resin layer in interaction with an adherend interface, and give cohesive strength to a bulk of the resin composition. Examples thereof include rosin ester based PENSEL series products (manufactured by Arakawa Chemical Industries Ltd.), terpene based tackifiers (manufactured by Yasuhara Chemical Co., Ltd.), and HARITACK series products (manufactured by Harima Chemicals Group, Inc.). The tackifier may be added to the composition in such an amount that makes the composition high in elastic modulus and does not permit the loss of the tackiness. The tackifier is added in an amount of 5 to 40 parts by weight for 100 parts by weight of the (meth)acrylic polymer.

Furthermore, the resin composition of the present invention may include a silane coupling agent to be improved in adhesion reliability to an adherend interface. The blend amount of the silane coupling agent is 1 part or less, more preferably from 0.01 to 1 part, even more preferably from 0.02 to 0.6 parts by weight for 100 parts by weight of the (meth)acrylic polymer. If the blend of the silane coupling agent is excessive, the crosslinkage of the resin composition may be inhibited, or the composition may be damaged in adhesive properties. If the amount of the blend is too small, the advantageous effects of the agent are not unfavorably gained.

Examples of the silane coupling agent include 3-glycidoxypropyltrimethoxysilane, 3-glycidoxypropyltriethoxysilane, 3-glycidoxypropylmethyldiethoxysilane, 2-(3,4 epoxycyclohexyl)ethyltrimethoxysilane, and other epoxy-group-containing silane coupling agents; 3-aminopropyltrimethoxysilane, N-2-(aminoethyl)-3-aminopropylmethyldimethoxysilane, 3-triethoxysilyl-N-(1,3-dimethylbutylidene)propylamine, N-phenyl-γ-aminopropyltrimethoxysilane, and other amino-group-containing silane coupling agents; 3-acryloxypropyltrimethoxysilane, 3-methacryloxypropyltriethoxysilane, and other (meth)acryl-group-containing silane coupling agents; and 3-isocyanatopropyltriethoxysilane, and other isocyanate-group-containing silane coupling agents.

Furthermore, the resin composition of the present invention may include other known dopants. For example, the following may be appropriately added to the composition in accordance with the usage thereof: powders such as a colorant and a pigment, a dye, a surfactant, a plasticizer, a tackifier, a surface lubricant, a levelling agent, a softener, an antioxidant, an antiaging agent, a light stabilizer, an ultraviolet absorbent, a polymerization inhibitor, an inorganic or organic filler, a metallic powder, or a particle-or foil-form material.

<Resin Layer>

The resin layer of the present invention is made of/from the above-defined resin composition. The thickness of the resin layer is not particularly limited, and is, for example, from about 1 to 1000 μm. The thickness of the resin layer is preferably from 3 to 500 μm, more preferably from 5 to 200 μm.

The gel fraction of the resin layer is preferably from 20 to 95% by weight. The gel fraction of the resin layer is more preferably 25% or more, even more preferably 30% or more, even more preferably 35% or more by weight to make the resin layer high in cohesive strength and holding strength. The gel fraction of the resin layer is more preferably 80% or less, even more preferably 70% or less, even more preferably 65% or less by weight to make the resin layer high in adhering strength. When the resin composition includes one or more crosslinking agents, the gel fraction is controllable by adjusting the addition amount of the whole of the crosslinking agent(s), and further making a sufficient consideration about the effect of the crosslinking treatment temperature and the crosslinking treatment period.

The resin layer can be formed as a laminated sheet, for example, by applying the resin composition onto one surface or both surfaces of a support, and then heating and drying a polymerizing solvent and others therein to be removed. In the application of the resin composition, one or more solvents other than the polymerizing solvent may be newly added appropriately to the composition.

As the method of applying the resin composition, various methods can be used. Specific examples thereof include roll coating, kiss roll coating, gravure coating, reverse coating, roll brushing, spray coating, dip roll coating, bar coating, knife coating, air knife coating, curtain coating, lip coating, or extrusion coating using, for example, a die coater.

The temperature for the heating and the drying is preferably from 40 to 200°C, more preferably from 50 to 180°C, in particular preferably from 70 to 170°C. When the heating temperature is set in any one of these ranges, a resin layer can be yielded which has very good adhesive properties. The period for the heating and the drying is preferably from 5 seconds to 20 minutes, more preferably from 5 seconds to 15 minutes, in particular preferably from 10 seconds to 10 minutes.

When the (meth)acrylic polymer in the present invention is produced by radiating ultraviolet rays to the monomer components to be polymerized, about the formation of the resin layer the (meth)acrylic polymer can be produced from the monomer components and simultaneously the resin layer can be formed. Materials that can be blended into the resin composition, one of which is a crosslinking agent, can be appropriately incorporated into the monomer components. About the monomer components, a syrup yielded by polymerizing the components beforehand in a partial quantity thereof is usable in the radiation of the ultraviolet rays. For the ultraviolet ray radiation, for example, the following are usable: a high-pressure mercury lamp, a low-pressure mercury lamp, or a metal halide lamp.

The support may be a supporting film that may be of various types, examples of which include polyethylene, polypropylene, polyethylene terephthalate and polyester films and other plastic films; a polyacrylic film; paper, cloth, nonwoven cloth, and other porous materials; a net; a polyethylene foam, an acrylic foam and other air-bubble-contained sheets; a metal foil piece; and any laminated body composed of two or more of these examples. The foam may be a foam based on the incorporation of hollow particles into a material. The thickness of the supporting film is usually from about 5 to 3000 $\mu$m, preferably from about 10 to 2500 $\mu$m, more preferably from about 20 to 2000 $\mu$m.

As required, the supporting film may be subjected to a releasing and antifouling treatment with a silicone-, fluorine-containing-, long-chain-alkyl- or aliphatic-acid-amide-type releasing agent, or silica powder, or to an antistatic treatment of, for example, a painting-, kneading-in-, or vapor-deposition-type.

When the resin layer in the laminated sheet of the present invention is naked, the resin layer may be protected with a separator until the laminated sheet is put into practical use. At the time of the practical use, the separator is peeled off.

The matter which constitutes the separator is, for example, an appropriate single-sheet, examples of which include polyethylene, polypropylene, polyethylene terephthalate and polyester films, and other plastic films; paper, cloth, nonwoven cloth, and other porous materials; a net, a foam-contained sheet, and a metal foil piece; and any laminated body composed of two or more of these examples. Such a plastic film is preferably used because of an excellent surface-smoothness thereof.

The plastic film is not particularly limited as long as the film is a film capable of protecting the resin layer. Examples thereof include polyethylene films, polypropylene films, polybutene films, polybutadiene films, polymethylpentene films, polyvinyl chloride films, vinyl chloride copolymer films, polyethylene terephthalate films, polybutylene terephthalate films, polyurethane films, and ethylene-vinyl acetate copolymer films.

The thickness of the separator is usually from about 5 to 300 $\mu$m, preferably from about 5 to 200 $\mu$m. As required, the separator may be subjected to a releasing and antifouling treatment with, for example, a silicone-, fluorine-containing-, long-chain-alkyl- or aliphatic-acid-amide-type releasing agent, or silica powder, or to an antistatic treatment of, for example, a painting-, kneading-in-, or vapor-deposition-type. The releasability of the separator from the resin layer can be made higher, particularly, by subjecting the surface of the separator appropriately to a releasing treatment, such as silicone treatment, long-chain-alkyl treatment or fluorine treatment.

The resin composition, the resin layer and the laminated sheet of the present invention are preferably used for being bonded to an adherend having a rough surface, such as a concrete body, a mortar body, a gypsum board, a coniferous plywood, a woody cement plate, a calcium silicate plate, a tile, or a fiber-reinforced cement plate.

The surface irregularity level (surface roughness) of the adherend having a rough surface is from about 1 $\mu$m to several hundred micrometers. The laminated sheet is in particular preferably used for an adherend having a rough surface having a surface irregularity level (surface roughness) of 1 to 500 $\mu$m.

EXAMPLES

Hereinafter, the present invention will be specifically described by way of working examples thereof. However, the invention is not limited by these working examples. In each of the examples, "part(s)" and "%" are "part(s) by weight" and "% by weight", respectively. About evaluating items in the working examples and others, measurements were made as will be described later.

Example 1

<Preparation of (Meth)acrylic Polymer>

Into a four-necked flask equipped with stirring fans, a thermostat, a nitrogen-gas-introducing tube, and a condenser were charged 90 parts by weight of 2-ethylhexyl acrylate (2EHA), 10 parts by weight of ethylcarbitol acrylate (CBA), 0.25 parts by weight of 4-hydroxybutyl acrylate (4HBA), 1 part by weight of acrylic acid (AA), and 0.07 parts by weight of 2,2'-azobisobutyronitrile as a polymerization initiator together with 105 parts by weight of ethyl acetate. While this system was gently stirred, nitrogen gas was introduced thereinto to purge the system with nitrogen for one hour.

Thereafter, while the temperature of the liquid in the flask was kept at a temperature near 60 to 65°C, polymerization reaction was conducted for 10 hours to prepare a solution of a (meth)acrylic polymer having a weight-average molecular weight of 770000. The Tg of the resultant (meth)acrylic polymer was -68.7°C.

Next, into 100 parts by weight of a polymeric solid in the (meth)acrylic polymer as described above were blended 0.16 parts by weight of a trimethylolpropane adduct of 2,4-tolylene diisocyanate (trade name: CORONATE L, manufactured by Tosoh Corp.) as a crosslinking agent to prepare a resin composition solution.

Next, the resultant resin composition solution was painted onto one surface of a 38-$\mu$m-thick polyethylene terephthalate (PET) film separator (trade name: DIAFOIL MRF, manufactured by Mitsubishi Plastics, Inc.) subjected to silicone treatment to give a resin layer thickness of 95 $\mu$m after the painted layer would be dried. The resultant was then dried at 130°C for 5 minutes to form a resin layer. In this way, a laminated sheet was produced.

Examples 2 to 29, and Comparative Examples 1 to 5

In each of the examples, a laminated sheet was produced by the same operations as in Example 1 except that changes were made as shown in Table 1 about the species of the monomers used to prepare the (meth)acrylic polymer and/or the composition ratio therebetween, and the species of the crosslinking agent and/or the blend amount thereof. The weight-average molecular weight and the Tg of the resultant (meth)acrylic polymer are shown in Table 1.

Example 30

<Preparation of (Meth)acrylic Polymer Syrup>

Into a four-necked flask equipped with stirring fans, a thermostat, a nitrogen-gas-introducing tube, and a condenser were charged 90 parts by weight of 2-ethylhexyl acrylate (2EHA), 10 parts by weight of ethylcarbitol acrylate (CBA), 0.25 parts by weight of 4-hydroxybutyl acrylate (4HBA), 1 part by weight of acrylic acid (AA), 0.15 parts by weight of a photopolymerization initiator (trade name: IRGACURE 184, manufactured by the company BASF), and 0.15 parts by weight of a photopolymerization initiator (trade name: IRGACURE 651, manufactured by the BASF) to prepare a monomer mixture. Next, the monomer mixture was exposed to ultraviolet rays in a nitrogen atmosphere to photopolymerize the mixture in a partial amount thereof to yield a partially polymerized product ((meth)acrylic polymer syrup) having a polymerization rate of about 10% by weight.

Next, to 100 parts by weight of the (meth)acrylic polymer syrup were added 0.01 parts by weight of trimethylolpropane triacrylate (TMPTA) as a crosslinking agent, and then these were uniformly mixed with each other to prepare monomer components.

Next, the monomer components prepared as described above were painted onto one surface of 38-$\mu$m-thick polyester film (trade name: DIAFOIL MRF, manufactured by Mitsubishi Plastics, Inc.), this surface being subjected to silicone releasing treatment, to give a final thickness of 95 $\mu$m. In this way, a painted layer was formed. Next, the outer surface of the painted monomer components were coated with a 38-$\mu$m-thick polyester film (trade name: DIAFOIL MRE, manufactured by Mitsubishi Plastics, Inc.), one of the surfaces of this film being subjected to releasing treatment with a silicone, to direct the releasing-treatment applied surface of the film to the painted layer side of the resultant. In this way, the painted layer of the monomer components was blocked from oxygen. A chemical light lamp (manufactured by Toshiba Corp.) was used to radiate ultraviolet rays to the thus yielded sheet having the painted layer at an illuminance of 5 mW/cm$^2$ (measured using a device TOPCON UVR-T1 having a maximum sensitivity at about 350 nm) for 360 seconds. In this way, the painted layer was cured to yield a resin layer. The polyester film (DIAFOIL MRE) was then peeled off from the one surface of the workpiece. In this way, a laminated sheet was produced.

Examples 31 to 33

In each of the examples, a laminated sheet was produced by the same operations as in Example 30 except that the composition ratio between the monomers used to prepare the (meth)acrylic polymer syrup in Example 30 was changed as shown in Table 2. The Tg of the resultant (meth)acrylic polymer is shown in Table 2.

Evaluations described below were made about the laminated sheet (sample) yielded in each of the working examples and the comparative examples. The evaluation results are shown in Tables 1 and 2.

<Measurement of Gel Fraction>

From the resin layer of the laminated sheet, a piece of a predetermined amount (initial weight W1) was taken out, and the piece was immersed in an ethyl acetate solution. This system was allowed to stand still at room temperature for one week. Thereafter, an insoluble fraction therein was taken out and dried. The weight (W2) of the dried fraction was measured to calculate the gel fraction as described below.

```
Gel fraction (%) = (W2/W1) × 100
```

<Measurement of Peel Adhering Strength>

A 25-μm-thick PET film (LUMIRROR S10, manufactured by Toray Industries, Inc.) was bonded to the adhesive surface of the sample yielded in each of the working examples and the comparative examples. The resultant was used as an evaluating sample. The evaluating sample was cut into pieces each having a width of 20 mm and a length of about 100 mm, and then their separators (DIAFOIL MRF, manufactured by Mitsubishi Plastics, Inc.) were peeled off. A gypsum board (trade name: TIGER BOARD, manufactured by Yoshino Gypsum Co., Ltd.; thickness: 9.5 mm), a coniferous plywood (available from SHIMACHU HOME'S; thickness 12 mm), and a calcium silicate plate (KEICAL plate, available from SHIMACHU HOME'S; thickness: 5 mm) were used as various adherends, and the cut pieces were bonded, respectively, to these adherends by reciprocating a roll of a weight of 2 kg once on each of the board- or plate-bonded pieces. Next, these were allowed to stand still at room temperature (at 23°C) for 30 minutes, and then the peel adhering strength (N/20-mm) of each of the pieces was measured at a peeling angle of 180°, and a peel rate of 300 mm/minute. For reference, the peel adhering strength is preferably 10 N/20-mm or more, more preferably 12 N/20-mm or more, even more preferably 15 N/20-mm or more.

<Measurement of Holding Strength>

A 25-μm-thick PET film (LUMIRROR S10, manufactured by Toray Industries, Inc.) was bonded to the adhesive surface of the sample yielded in each of the working examples and the comparative examples. The resultant was used as an evaluating sample. The evaluating sample was cut into a piece having a width of 10 mm and a length of 100 mm, and then its separator (DIAFOIL MRF, manufactured by Mitsubishi Plastics, Inc.) was peeled off. A coniferous plywood (available from SHIMACHU HOME'S; thickness 12 mm) was used as an adherend, and the cut piece was bonded to the adherend to give a bonded area of a width of 10 mm and a length of 20 mm by reciprocating a roll of a weight of 2 kg once on the plywood. Next, this adherend-bonded piece was allowed to stand still at room temperature (at 23°C) for 30 minutes, and the coniferous plywood was vertically hung. A load of 500 g was given to a free end of this sample piece. The sample piece was allowed to stand still in an environment of 40°C temperature for one hour in the state that this load was given. The distance (mm) of a shift of the sample tape from the initially sample-bonded position was measured. In this sway, the holding strength (mm/h) was calculated out. For reference, the holding strength is preferably 2.0 mm/h or less, more preferably 1.5 mm/h or less, even more preferably 1.0 mm/h or less.

[Table 1]

| | (Meth)acrylic polymer | | | Crosslinking agent | | Resin layer | | Evaluations | | | |
| | Monomer species, and composition ratio (ratio by weight) therebetween | Weight-average molecular weight | Tg (°C) | Species | Blend amount (parts by weight) | Film thickness (μm) | Gel fraction (%) | Adhering strength (N/20-mm) | | | Holding strength (mm/h) (coniferous plywood) |
| | | | | | | | | Gypsum board | Coniferous plywood | Calcium silicate plate | |
|---|---|---|---|---|---|---|---|---|---|---|---|
| Example 1 | 2EHA/CBA/4HBA/AA=90/10/0.25/1 | 770000 | -68.7 | C/L | 0.16 | 95 | 37.2 | 24.0 | 24.0 | 17.5 | 0.80 |
| Example 2 | 2EHA/CBA/4HBA/AA=90/10/0.25/1 | 770000 | -68.7 | C/L | 0.18 | 95 | 42.4 | 20.5 | 26.0 | 17.0 | 0.45 |
| Example 3 | 2EHA/CBA/4HBA/AA=90/10/0.25/1 | 540000 | -68.7 | C/L | 0.20 | 95 | 50.1 | 18.0 | 22.0 | 16.2 | 0.35 |
| Example 4 | 2EHA/CBA/4HBA/AA=80/20/0.25/1 | 760000 | -68.4 | C/L | 0.18 | 95 | 37.5 | 22.0 | 19.9 | 18.5 | 0.55 |
| Example 5 | 2EHA/CBA/4HBA/AA=60/40/0.25/1 | 810000 | -67.8 | C/L | 0.20 | 95 | 36.0 | 19.8 | 20.2 | 18.9 | 0.65 |
| Example 6 | 2EHA/CBA/4HBA/AA=95/5/0.25/1 | 790000 | -68.9 | C/L | 0.08 | 95 | 40.5 | 15.1 | 26.8 | 15.9 | 0.80 |
| Example 7 | 2EHA/CBA/4HBA/AA=80/20/0.25/2 | 820000 | -66.4 | C/L | 0.22 | 95 | 42.6 | 16.9 | 26.5 | 14.9 | 0.40 |
| Example 8 | 2EHA/#MTG/4HBA/AA=90/10/0.25/1 | 900000 | -67.8 | C/L | 0.19 | 95 | 44.8 | 18.5 | 25.0 | 16.4 | 0.65 |
| Example 9 | INA/CBA/4HBA/AA=80/20/0.25/1 | 740000 | -58.9 | C/L | 0.17 | 95 | 38.2 | 17.5 | 19.2 | 17.8 | 0.65 |

16

| | Resin composition | | | | | Resin layer | | Evaluations | | | |
|---|---|---|---|---|---|---|---|---|---|---|---|
| | (Meth)acrylic polymer | | | Crosslinking agent | | | | Adhering strength (N/20-mm) | | | |
| | Monomer species, and composition ratio (ratio by weight) therebetween | Weight-average molecular weight | Tg (°C) | Species | Blend amount (parts by weight) | Film thickness ($\mu$m) | Gel fraction (%) | Gypsum board | Coniferous plywood | Calcium silicate plate | Holding strength (mm/h) (coniferous plywood) |
| Example 10 | IMA/CBA/ 4HBA/AA=80/20/0.25/ 1 | 680000 | -57.3 | C/L | 0.20 | 95 | 41.0 | 17.8 | 19.6 | 18.0 | 0.55 |
| Example 11 | 2EHA/CBA/ 4HBA/AA=90/10/0.5/1 | 750000 | -68.6 | C/L | 0.12 | 95 | 38.2 | 17.5 | 24.5 | 17.1 | 0.45 |
| Example 12 | 2EHA/CBA/ 4HBA/AA=90/10/1/1 | 720000 | -68.5 | C/L | 0.05 | 95 | 40.0 | 18.0 | 25.5 | 16.8 | 0.40 |
| Example 13 | 2EHA/CBA/ 4HBA/AA=80/20/0.25/ 1 | 760000 | -68.4 | D110N | 0.24 | 95 | 39.8 | 17.0 | 26.5 | 17.2 | 0.40 |
| Example 14 | 2EHA/CBA/ 4HBA/AA=80/20/0.25/ 1 | 760000 | -68.4 | D120N | 0.19 | 95 | 35.2 | 17.3 | 27.3 | 17.4 | 0.65 |
| Example 15 | 2EHA/CBA/ 4HBA/AA=90/10/0.05/ 1 | 740000 | -68.8 | C/L | 0.36 | 95 | 40.5 | 21.8 | 26.3 | 18.1 | 0.55 |
| Example 16 | 2EHA/CBA/ 4HBA/AA=90/10/0.1/0. 5 | 820000 | -69.2 | C/L | 0.21 | 95 | 39.0 | 23.3 | 21.0 | 18.6 | 0.80 |
| Example 17 | 2EHA/CBA/ 4HBA/AA=90/10/0.1/0. 2 | 750000 | -69.5 | C/L | 0.15 | 95 | 37.3 | 20.8 | 23.0 | 18.4 | 0.50 |
| Example 18 | 2EHA/CBA/HEA/AA=9 0/10/0.5/1 | 670000 | -68.6 | C/L | 0.25 | 95 | 41.0 | 19.5 | 26.3 | 17.3 | 0.55 |

| | Resin composition | | | | | Resin layer | | Evaluations | | | |
|---|---|---|---|---|---|---|---|---|---|---|---|
| | (Meth)acrylic polymer | | | Crosslinking agent | | | | Adhering strength (N/20-mm) | | | |
| | Monomer species, and composition ratio (ratio by weight) therebetween | Weight-average molecular weight | Tg (°C) | Species | Blend amount (parts by weight) | Film thickness (μm) | Gel fraction (%) | Gypsum board | Coniferous plywood | Calcium silicate plate | Holding strength (mm/h) (coniferous plywood) |
| Example 19 | 2EHA/#MTG/ 4HBA/AA=80/20/0.25/ 1 | 870000 | -66.5 | C/L | 0.11 | 95 | 44.5 | 18.0 | 23.8 | 18.1 | 0.70 |
| Example 20 | 2EHA/#MTG/ 4HBA/AA=80/20/0.25/ 1.5 | 930000 | -66.1 | C/L | 0.10 | 95 | 43.5 | 17.5 | 24.4 | 17.6 | 0.75 |
| Example 21 | 2EHA/CBA/ 4HBA/AA=90/10/0.25/ 1 | 370000 | -68.7 | C/L | 0.24 | 95 | 45.0 | 19.0 | 21.0 | 15.6 | 0.80 |
| Example 22 | 2EHA/CBA/ 4HBA/AA=80/20/0.25/ 2.5 | 650000 | -67.0 | C/L | 0.20 | 95 | 38.5 | 16.3 | 24.5 | 13.8 | 0.65 |
| Example 23 | 2EHA/CBA/ 4HBA=90/10/1 | 870000 | -69.4 | D110N | 0.17 | 95 | 41.0 | 22.5 | 22.8 | 18.2 | 0.45 |
| Example 24 | 2EHA/CBA/AA=90/10/ 2 | 750000 | -68.8 | D140N | 0.39 | 95 | 42.5 | 16.3 | 23.2 | 13.7 | 0.35 |
| Example 25 | 2EHA/CBA/ 4HBA/AA=90/10/0.25/ 1 | 1040000 | -68.7 | C/L | 0.13 | 95 | 38.3 | 18.2 | 23.5 | 16.4 | 0.55 |
| Example 26 | 2EHA/#MTG/ 4HBA/AA=80/20/0.25/ 1.5 | 930000 | -66.1 | C/L | 0.14 | 95 | 47.2 | 17.1 | 23.2 | 16.9 | 0.45 |
| Example 27 | 2EHA/CBA/ 4HBA/AA=80/20/0.25/ 2 | 820000 | -66.4 | C/L | 0.25 | 95 | 46.5 | 15.9 | 24.5 | 14.1 | 0.35 |

EP 3 486 284 A1

18

| | Resin composition | | | | | Resin layer | | Evaluations | | | |
| | (Meth)acrylic polymer | | | Crosslinking agent | | | | Adhering strength (N/20-mm) | | | |
| | Monomer species, and composition ratio (ratio by weight) therebetween | Weight-average molecular weight | Tg (°C) | Species | Blend amount (parts by weight) | Film thickness ($\mu$m) | Gel fraction (%) | Gypsum board | Coniferous plywood | Calcium silicate plate | Holding strength (mm/h) (coniferous plywood) |
|---|---|---|---|---|---|---|---|---|---|---|---|
| Example 28 | 2EHA/CBA/4HBA/AA=80/20/0 .2/1.5 | 720000 | -67.9 | C/L | 0.26 | 95 | 44.2 | 17.7 | 25.2 | 17.2 | 0.75 |
| Example 29 | 2EHA/CBA/4HBA/AA=90/10/0.25/1 | 540000 | -68.7 | C/L | 0.28 | 95 | 57.2 | 17.3 | 20.5 | 15.2 | 0.20 |
| Comparative Example 1 | 2EHA/AA=100/2 | 650000 | -68.1 | T/C | 0.02 | 95 | 42.0 | 9.3 | 13.0 | 9.8 | 0.50 |
| Comparative Example 2 | 2EHA/AA=100/4 | 580000 | -66.3 | T/C | 0.022 | 95 | 40.1 | 9.1 | 13.8 | 6.1 | 2.35 |
| Comparative Example 3 | 2EHA/BA/4HBA/AA=80/2 0/0.2/3 | 520000 | -64.3 | C/L | 0.90 | 95 | 40.1 | 11.1 | 14.5 | 6.5 | 0.65 |
| Comparative Example 4 | 2EHA/HEA=100/3 | 550000 | -68.7 | C/L | 0.15 | 95 | 39.7 | 13.1 | 13.8 | 8.1 | 0.35 |
| Comparative Example 5 | 2EHA/4HBA/AA=100/0.25/1 | 750000 | -69.0 | C/L | 0.12 | 95 | 53.2 | 10.5 | 14.8 | 9.4 | 0.20 |

[Table 2]

| | Resin composition | | | | | Resin layer | | Evaluations | | | |
| | (Meth)acrylic polymer | | | Crosslinking agent | | | | Adhering strength (N/20-mm) | | | Holding strength (mm/h) (coniferous plywood) |
| | Monomer species, and composition ratio (ratio by weight) therebetween | Weight-average molecular weight | Tg (°C) | Species | Blend amount (parts by weight) | Film thickness (μm) | Gel fraction (%) | Gypsum board | Coniferous plywood | Calcium silicate plate | |
|---|---|---|---|---|---|---|---|---|---|---|---|
| Example 30 | 2EHA/CBA/ 4HBA/AA=90/10/0.25/ 1 | - | -68.7 | TMPTA | 0.010 | 95 | 62.0 | 15.2 | 18.5 | 14.2 | 0.20 |
| Example 31 | 2EHA/CBA/ 4HBA/AA=80/20/0.25/ 1 | - | -68.4 | TMPTA | 0.010 | 95 | 61.0 | 15.7 | 19.4 | 14.5 | 0.25 |
| Example 32 | 2EHA/CBA/ 4HBA/AA=80/20/0.10/ 1.5 | - | -68.0 | TMPTA | 0.010 | 95 | 63.0 | 14.8 | 22.5 | 13.5 | 0.30 |
| Example 33 | 2EHA/CBA/ 4HBA/AA=80/20/0.25/ 1 | - | -68.4 | TMPTA | 0.012 | 95 | 64.0 | 14.9 | 17.8 | 13.9 | 0.15 |

EP 3 486 284 A1

20

In each of Tables 1 and 2, 2EHA represents 2-ethylhexyl acrylate (Osaka Organic Chemical Industry, Ltd.; Tg of a homopolymer therefrom = -70°C);
INA, isononyl acrylate (manufactured by Osaka Organic Chemical Industry, Ltd.; Tg of a homopolymer therefrom =-58°C);
IMA, isomyristyl acrylate (manufactured by Osaka Organic Chemical Industry, Ltd.; Tg of a homopolymer therefrom = -56°C);
CBA, ethylcarbitol acrylate (manufactured by Osaka Organic Chemical Industry, Ltd.; Tg of a homopolymer therefrom = -67°C);
#MTG, methoxytriethylene glycol acrylate (manufactured by Osaka Organic Chemical Industry, Ltd.; Tg of a homopolymer therefrom = -57°C);
4HBA, 4-hydroxybutyl acrylate (manufactured by Osaka Organic Chemical Industry, Ltd.; Tg of a homopolymer therefrom = -32°C);
HEA, hydroxyethyl acrylate (manufactured by Osaka Organic Chemical Industry, Ltd.; Tg of a homopolymer therefrom = -15°C);
AA, acrylic acid (manufactured by Toagosei Co., Ltd.; Tg of a homopolymer therefrom = 106°C); and
BA, butyl acrylate (manufactured by Toagosei Co., Ltd.; Tg of a homopolymer therefrom = -55°C).
In each of Tables 1 and 2, C/L represents trimethylolpropane/2,4-tolylene diisocyanate trimer adduct (trade name: CORONATE L, manufactured by Tosoh Corp.);
D110N, a trimethylolpropane adduct of xylylene diisocyanate (trade name: TAKENATE D110N, manufactured by Mitsui Chemicals, Inc.);
D120N, a trimethylolpropane adduct of xylylene diisocyanate (trade name: TAKENATE D120N, manufactured by Mitsui Chemicals, Inc.);
D140N, a trimethylolpropane adduct of isophorone diisocyanate (trade name: TAKENATE D140N, manufactured by Mitsui Chemicals, Inc.);
T/C, 1,3-bis(N,N-diglyciylaminomethyl)cyclohexane (trade name: TETRAD C, manufactured by Mitsubishi Gas Chemical Co., Inc.); and
TMPTA, trimethylolpropane triacrylate manufactured by Osaka Organic Chemical Industry, Ltd.).

**Claims**

1. A resin composition, comprising a (meth)acrylic polymer having a Tg of -40°C or lower and yielded by polymerizing monomer components comprising the following: 50 to 97% by weight of an alkyl (meth)acrylate (a1) having, as a terminal of its ester group, a branched alkyl group having 8 to 18 carbon atoms, a homopolymer made from the alkyl (meth)acrylate (a1) having a Tg of -50°C or lower; and 3 to 50% by weight of a (meth)acrylate (a2) having, in its molecular skeleton, an ether bond, a homopolymer made from the alkyl (meth)acrylate (a1) having a Tg of -40°C or lower.

2. The resin composition according to claim 1, wherein a total proportion of the alkyl (meth)acrylate (a1) and the ether-bond-having (meth)acrylate (a2) is 75% or more by weight of all monomers from which the (meth)acrylic polymer is made.

3. The resin composition according to claim 1, wherein a total proportion of the alkyl (meth)acrylate (a1) and the ether-bond-having (meth)acrylate (a2) is 85% or more by weight of all monomer components from which the (meth)acrylic polymer is made.

4. The resin composition according to any one of claims 1 to 3, wherein the ether-bond-having (meth)acrylate (a2) is a monomer represented by general formula (1):

$$CH_2=CR^1\text{-}COO\text{-}(AO)_n\text{-}R^2$$

wherein $R^1$ is a hydrogen atom or a methyl group, AO is an alkyleneoxy group having 2 to 3 carbon atoms, n represents an average addition molar number of the alkyleneoxy group or alkyleneoxy groups equivalent thereto and is from 1 to 8, and $R^2$ is an aromatic ring, or a linear, branched or alicyclic alkyl group.

5. The resin composition according to claim 4, wherein AO in the general formula (1) is an oxyethylene group.

6. The resin composition according to claim 4 or 5, wherein n in the general formula (1) is from 2 to 8.

7.  The resin composition according to any one of claims 4 to 6, wherein $R^2$ in the general formula (1) is an unsubstituted aromatic ring, or linear, branched or alicyclic alkyl group having 1 to 6 carbon atoms.

8.  The resin composition according to any one of claims 1 to 7, wherein the monomer components further comprise at least one functional-group-having monomer selected from a hydroxyl-group-having monomer, a carboxyl-group-having monomer, and an epoxy-group-having monomer.

9.  The resin composition according to claim 8, wherein the hydroxyl-group-having monomer is comprised in a proportion of 0.01 to 3% both inclusive by weight of all (the) monomer components from which the (meth)acrylic polymer is made.

10. The resin composition according to claim 8 or 9, wherein the carboxyl-group-having monomer is comprised in a proportion of 0.1 to 5% both inclusive by weight of all (the) monomer components from which the (meth)acrylic polymer is made.

11. The resin composition according to any one of claims 1 to 10, wherein the monomer components further comprise a polyfunctional monomer in a proportion of 5% or less by weight of all (the) monomer components from which the (meth)acrylic polymer is made.

12. The resin composition according to any one of claims 1 to 11, wherein the (meth)acrylic polymer has a weight-average molecular weight of 350000 or more.

13. The resin composition according to any one of claims 1 to 12, further comprising a crosslinking agent in an amount of 0.01 to 5 parts by weight for 100 parts by weight of the (meth)acrylic polymer.

14. The resin composition according to claim 13, wherein the crosslinking agent is an isocyanate crosslinking agent, and/or an epoxy crosslinking agent.

15. A resin layer, obtained from the resin composition recited in any one of claims 1 to 14.

16. The resin layer according to claim 15, which has a gel fraction of 20 to 95% by weight.

17. A laminated sheet, comprising a support, and the resin layer recited in claim 15 or 16 and positioned on at least one side of a support.

18. The laminated sheet according to claim 17, wherein the resin layer has a 180° peel adhering strength of 10 N/20-mm or more to an adherend under the following condition: a peel rate of 300 mm/minute.

19. The laminated sheet according to claim 17 or 18, wherein the support is any one of a plastic film, a paper piece, a nonwoven cloth piece, and an air-bubble-contained sheet.

20. The laminated sheet according to claim 18 or 19, wherein the adherend is any one of a concrete body, a mortar body, a gypsum board, a coniferous tree plywood sheet, a woody cement plate, a calcium silicate plate, a tile, and a fiber reinforced cement plate.

**INTERNATIONAL SEARCH REPORT**

| | International application No. |
|---|---|
| | PCT/JP2017/021435 |

**A. CLASSIFICATION OF SUBJECT MATTER**
*C08L33/14*(2006.01)i, *B32B27/00*(2006.01)i, *B32B27/30*(2006.01)i, *C08K5/1515*
(2006.01)i, *C08K5/29*(2006.01)i

According to International Patent Classification (IPC) or to both national classification and IPC

**B. FIELDS SEARCHED**

Minimum documentation searched (classification system followed by classification symbols)
B32B1/00-43/00, C08C19/00-19/44, C08F6/00-246/00, 301/00, C08K3/00-13/08,
C08L1/00-101/14

Documentation searched other than minimum documentation to the extent that such documents are included in the fields searched
Jitsuyo Shinan Koho          1922-1996    Jitsuyo Shinan Toroku Koho    1996-2017
Kokai Jitsuyo Shinan Koho    1971-2017    Toroku Jitsuyo Shinan Koho    1994-2017

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2015-124289 A (3M Innovative Properties Co.), 06 July 2015 (06.07.2015), claims; paragraphs [0026] to [0028], [0094] to [0099]; table 1 (Family: none) | 1-20 |
| X<br>A | WO 2015/133497 A1 (Dexerials Corp.), 11 September 2015 (11.09.2015), paragraphs [0039], [0040], [0046] to [0048] & US 2017/0081564 A1 paragraphs [0075], [0079], [0080] | 1-19<br>20 |
| A | JP 2016-121309 A (Nitto Denko Corp.), 07 July 2016 (07.07.2016), paragraphs [0182], [0190] (Family: none) | 1-20 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 June 2017 (26.06.17) | 04 July 2017 (04.07.17) |

| Name and mailing address of the ISA/ Japan Patent Office 3-4-3,Kasumigaseki,Chiyoda-ku, Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2017/021435 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2015-227394 A (Nitto Denko Corp.), 17 December 2015 (17.12.2015), paragraphs [0163], [0179]; table 1 (Family: none) | 1-20 |
| A | JP 2016-11338 A (Nichiban Co., Ltd.), 21 January 2016 (21.01.2016), paragraph [0077]; table 1 (Family: none) | 1-20 |
| A | JP 5920519 B1 (Toyo Ink SC Holdings Co., Ltd.), 18 May 2016 (18.05.2016), paragraph [0091]; table 1; example 9 (Family: none) | 1-20 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8104847 A
- WO 2013099683 A

**Non-patent literature cited in the description**

- Polymer Handbook. John Wiley & Sons, Inc, 1989
- Organic Peroxide Catalogue 9th version. Japan Oils & Fats Co., Ltd, May 2003